# EUROPÄISCHE PATENTSCHRIFT

(11) **EP 2 267 339 B1**
(45) Veröffentlichungstag und Bekanntmachung des Hinweises auf die Patenterteilung: **16.11.2011**
(21) Anmeldenummer: 10166841.6
(22) Anmeldetag: 22.06.2010
(51) Int. Cl.: F16H 59/02

(54) **Kalotteneinrichtung für Wählhebel**
Calotte device for gearshift
Dispositif de calotte pour levier sélectif

(30) Priorität: 26.06.2009 DE 102009027222
(43) Veröffentlichungstag der Anmeldung: 29.12.2010
(73) Patentinhaber: ZF Friedrichshafen AG, 88038 Friedrichshafen (DE)
(72) Erfinder: Szekeres-Kriselius, Jan, 49448, Lemförde (DE)

(56) Entgegenhaltungen:
- EP-A1- 0 647 801
- FR-A1- 2 840 699
- FR-A1- 2 851 811

## Beschreibung

Die Erfindung betrifft eine Kalotteneinrichtung zur Abdeckung der Kulissenöffnung eines Wählhebels oder Schalthebels, beispielsweise einer Betätigungseinrichtung für ein Kraftfahrzeuggetriebe, gemäß dem Oberbegriff des Patentanspruchs 1, und wie sie aus der FR2851811A bekannt ist.

Gattungsgemäße Kalotteneinrichtungen der eingangs genannten Art kommen beispielsweise, jedoch keineswegs ausschließlich, bei Personenkraftwagen zur Abdeckung der insbesondere im Bereich der Mittelkonsole des Kraftfahrzeugs angeordneten Kulissenöffnung des Wählhebels bzw. Schalthebels zum Einsatz. Wählhebel bzw. Schalthebel für Gangwechselgetriebe von Kraftfahrzeugen bewegen sich üblicherweise in einer oder mehreren Gassen vorzugsweise in Längsrichtung des Kraftfahrzeugs, wobei jedoch auch seitliche Bewegungen des Wählhebels bzw. Schalthebels auftreten. Daher muss im Bereich der Mittelkonsole eine den möglichen Bewegungen des Wählhebels bzw. Schalthebels entsprechende Ausnehmung bzw. Kulissenöffnung angeordnet sein, welche vom Schalthebel- bzw. Wählhebelschaft durchragt ist.

Um Eindringen von Verschmutzungen in die Kulissenöffnung zu verhindern und um gleichzeitig ein geschlossenes Erscheinungsbild der Mittelkonsole im Bereich des Wählhebels bzw. Schalthebels zu ermöglichen, wird die Kulissenöffnung im allgemeinen abgedeckt, zumeist entweder durch einen Schaltsack bzw. Faltenbalg, durch eine Jalousiekonstruktion, oder durch eine am Wählhebelschaft - unmittelbar unter der Schaltkulisse in der Mittelkonsole - angeordnete bewegliche Kalotte. Die Größe und Form der Kalotte ist dabei insbesondere so gehalten, dass die Kulissenöffnung in jeder Stellung des Wählhebels vollständig von der Kalotte abgedeckt ist.

Bei bekannten Kalotteneinrichtungen wird die Kalotte üblicherweise mittels der Vorspannung einer Feder in Richtung der Kulissenöffnung bzw. in Richtung der Mittelkonsole gedrückt, um eine optimale Anlage bzw. einen minimalen Spalt zwischen der Kalotte und der Innenoberfläche der Mittelkonsole im Bereich der Kulissenöffnung zu erzielen.

Diese bewegliche und federbelastete Aufhängung der Kalotte am Wählhebelschaft ist jedoch einerseits konstruktiv aufwändig und damit tendenziell kostenintensiv. Andererseits können - durch das mit dieser bekannten Ausführung der Kalotteneinrichtung zwangsläufig verbundene Schleifen der Oberfläche der Kalotte an der Mittelkonsole im Bereich der Kulissenöffnung - unerwünschte Schleifgeräusche, wie auch dementsprechende Schleifspuren auf der Oberfläche der Kalotte entstehen. Zudem muss die erforderliche axialbewegliche Lagerung der Kalotte am Wählhebelschaft sorgfältig und möglichst spielfrei ausgeführt sein, um nicht wiederum in diesem Bereich zu Relativbewegungen und zu Geräuschentwicklung zwischen Kalotte und Wählhebelschaft zu führen.

Mit diesem Hintergrund ist es die Aufgabe der vorliegenden Erfindung, eine Kalotteneinrichtung zur Abdeckung der Kulissenöffnung für einen Wählhebel bzw. Schalthebel zu schaffen, mit der sich die genannten Nachteile des Standes der Technik überwinden lassen. Insbesondere soll die Kalotteneinrichtung kostengünstig herstell- und montierbar sein, mit einer geringen Anzahl an Bauteilen auskommen, und es sollen die mit den Kalotteneinrichtungen aus dem Stand der Technik verbundenen Probleme, insbesondere Schleifspuren auf der Kalotte und/oder Schleifgeräusche im Bereich der Mittelkonsole, eliminiert werden.

Diese Aufgabe wird durch eine Kalotteneinrichtung mit den Merkmalen des Patentanspruchs 1 gelöst. Bevorzugte Ausführungsformen sind Gegenstand der Unteransprüche.

Die erfindungsgemäße Kalotteneinrichtung dient in an sich bekannter Weise zunächst einmal der Abdeckung der Kulissenöffnung beispielsweise einer Betätigungseinrichtung für ein Gangwechselgetriebe mit einem Schalthebel oder Wählhebel, wobei die Kulissenöffnung insbesondere im Bereich der Mittelkonsole eines Kraftfahrzeugs angeordnet sein kann. Prinzipiell lässt sich die Erfindung jedoch auf alle ähnlichen Kalotteneinrichtungen von Betätigungselementen unterschiedlicher Art anwenden, beispielsweise auch bei Blinkerhebeln, Lichtschaltern und dergleichen, unabhängig davon, ob die Kalotte unterhalb oder oberhalb der zugeordneten Konsole angeordnet ist.

In an sich ebenfalls bekannter Weise umfasst die Kalotteneinrichtung eine Kalotte sowie eine auf dem Schaft des Wählhebels bzw. Betätigungselements oder Schalthebels anordenbare Hülse, wobei die Hülse der Ankopplung der Kalotte an den Hebelschaft dient und hierzu mit der Kalotte verbunden ist.

Erfindungsgemäß jedoch zeichnet sich die Kalotteneinrichtung dadurch aus, dass die Hülse anhand eines Hülsen-Klemmbereichs mit dem Wählhebelschaft mittels einer Überwurfmutter in einer Vielzahl unterschiedlicher Axialpositionen festlegbar ist. Die Überwurfmutter erlaubt damit das variable Festlegen der Hülse und damit auch der Kalotte relativ zum Wählhebelschaft innerhalb eines axialen Klemmbereichs des Hebelschafts.

Hierdurch ergibt sich zunächst einmal der Vorteil, dass die Kalotte zusammen mit der Hülse so am Hebelschaft montiert werden kann, dass sich gerade noch ein minimaler Luftspalt zwischen der Kalotte und der entsprechenden Innenoberfläche der Mittelkonsole im Bereich der Kulissenöffnung ergibt. Die Kalotte wird erfindungsgemäß mit anderen Worten nicht mehr - unter Federbelastung - an der Innenoberfläche der Konsole schleifend montiert, sondern bewegt sich bei Betätigung des Wählhebels berührungslos knapp unterhalb der Oberfläche der Konsole im Bereich der Kulissenöffnung. Auf diese Weise können weder Schleifspuren noch Schleifgeräusche entstehen, ebenso wie mangels Schleifens und damit verbundener Reibungskräfte etwaige Relativbewegungen zwischen Kalotte/Hülse und Hebelschaft induziert werden können. Vielmehr ergibt sich im Unterschied zum Stand der Technik durch die Klemmung zwischen der Hülse und dem Wählhebelschaft zudem ein spielfreier Sitz der Hülse bzw. der mit der Hülse verbundenen Kalotte auf dem Wählhebelschaft.

Aufgrund des mit der Erfindung gegebenen Wegfalls der Einrichtung zur Aufbringung einer Federkraft auf die Hülse ergeben sich konstruktive Vereinfachungen sowie eine Reduktion beim Platzbedarf und bei der Teileanzahl, wobei zudem die verbleibenden Teile als einfache, kostengünstige Kunststoffteile darstellbar sind.

Die Erfindung wird zunächst einmal unabhängig davon verwirklicht, wie Kalotte und Hülse konstruktiv realisiert werden, solange die mit der Hülse verbundenen Kalotte als Einheit am Wählhebelschaft festlegbar ist. So können Kalotte und Hülse aus Gründen der besseren Entformbarkeit beispielsweise separat gefertigt und mittels einer Rastverbindung miteinander verbunden werden. Gemäß einer weiteren möglichen Ausführungsform der Erfindung können Kalotte und Hülse auch einstückig ausgebildet sein, wodurch die Teileanzahl weiter reduziert und die Montage dementsprechend vereinfacht wird.

Eine weitere besonders bevorzugte Ausführungsform der Erfindung sieht vor, dass die Oberfläche des Wählhebelschafts innerhalb des zur Klemmung zur Verfügung stehenden Schaftklemmbereichs sowie ferner auch die Innenoberfläche des Klemmbereichs der Hülse jeweils zueinander formkorrespondierenden Nullgewinde aufweisen.

Durch die formkorrespondierenden Nullgewinde, die vorzugsweise durch umlaufende Nuten auf der Oberfläche des Wählhebelschafts sowie an der Innenoberfläche des Hülsen-Klemmbereichs gebildet sind, ergibt sich zusätzlich ein Formschluss bezüglich der Klemmung zwischen der Hülse und dem Wählhebelschaft und damit - in einer Vielzahl von möglichen axialen Relativpositionen - ein fester Sitz der Hülse auf dem Wählhebelschaft.

Eine weitere bevorzugte Ausführungsform der Erfindung sieht vor, dass die Überwurfmutter einen Klemmbereich mit konisch zulaufender Innenkontur aufweist. Dadurch, dass die Innenkontur der Überwurfmutter nur im Klemmbereich konisch zulaufend ausgebildet ist, kann die Überwurfmutter beispielsweise durch leichtes Aufdrehen auf die Hülse vorgefügt werden, wobei jedoch gleichzeitig die axiale Verschiebbarkeit der Hülse und damit der Kalotte auf dem Wählhebelschaft bis zur abschließenden Montage in der erforderlichen axialen Position zunächst noch erhalten bleibt.

Dabei kann ferner der Klemmbereich der Überwurfmutter (beispielsweise auch mehrfach) geschlitzt ausgebildet sein. Hierdurch ergibt sich bei der Klemmung der Hülse auf dem Wählhebelschaft mittels der Überwurfmutter ein allmählicher, gleichmäßiger Aufbau der Klemmkraft infolge einer Biegeverformung der so zwischen den Schlitzen der Überwurfmutter ausgebildeten Klemmfinger, die gemeinsam die konisch zulaufende Innenkontur zur Klemmung der Hülse auf dem Wählhebelschaft bilden. Um eine ggf. erforderliche dauerhaft stärkere Klemmwirkung zu erreichen, kann der Klemmbereich der Überwurfmutter aber auch in Umfangsrichtung durchgehend ohne Schlitze ausgebildet werden.

Bevorzugt ist zudem auch der Klemmbereich der Hülse geschlitzt ausgebildet, wodurch sich ein leichterer Aufbau der Klemmkraft zwischen der Hülse und dem Wählhebelschaft beim Anbringen bzw. Festziehen der Überwurfmutter ergibt.

Nach einer weiteren bevorzugten Ausführungsform der Erfindung weisen Hülse und Überwurfmutter jeweils miteinander formkorrespondierende Steilgewinde auf. Durch die Steilgewinde ergibt sich eine schnelle Montage der Überwurfmutter auf der Hülse. Gleichzeitig kann die Montage mit geringerem Kraftaufwand erfolgen als dies beispielsweise bei einem Bajonettverschluss der Fall ist.

Eine weitere, besonders bevorzugte Ausführungsform der Erfindung sieht vor, dass Hülse und Überwurfmutter jeweils zumindest einen formkorrespondierenden Rastvorsprung bzw. Rasthaken aufweisen. Hierdurch ergibt sich eine sichere Fixierung der Überwurfmutter in der vorgesehenen Relativdrehwinkelstellung. Dies ist insbesondere bei der Ausführungsform der Überwurfmutter mit Steilgewinde von Bedeutung, da das Steilgewinde für sich genommen eine geringe Selbsthemmung aufweist und daher gegen Losdrehen besonders gesichert werden muss.

Vorzugsweise ist dabei der zumindest eine Rasthaken stirnseitig an der Überwurfmutter angeordnet. Zusätzlich weist die Überwurfmutter im Bereich des Rasthakens eine im Wesentlichen in Umfangsrichtung verlaufende schlitzförmige Ausnehmung auf. Auf diese Weise ergibt sich zunächst einmal eine einstückige und damit konstruktiv besonders einfache und zuverlässige Darstellung der federnden Aufhängung des Rasthakens. Die zusätzliche schlitzförmige Ausnehmung im Bereich des Rasthakens führt zu einer Nachgiebigkeit der Überwurfmutter im Bereich des Rasthakens und damit zu einer leichten und definierten Montage wie auch zu einer Wieder-Lösbarkeit der Rastierung zwischen der Überwurfmutter und der Hülse.

Eine weitere bevorzugte Ausführungsform der Erfindung sieht vor, dass die Kalotte - bzw. die Hülse an deren kalottenseitigem Ende - zumindest eine in Axialrichtung verlaufende Gleitfeder aufweist, wobei der Wählhebelschaft zumindest eine zu der Gleitfeder formkorrespondierende, in Axialrichtung verlaufende Nut aufweist. Durch Eingriff der Gleitfeder der Kalotte bzw. Hülse in die Nut des Wählhebelschafts ergibt sich eine konstruktiv einfache Möglichkeit zur Verdrehsicherung zwischen Hülse und Wählhebelschaft bzw. Kalotte und Wählhebelschaft. Dabei erlaubt die so gebildete Verdrehsicherung gleichzeitig eine axial innerhalb eines bestimmten Bereichs (vorzugsweise auf der gesamten Länge des Hülsen-Klemmbereichs auf dem Wählhebelschaft) unterschiedliche Positionierbarkeit der Hülse bzw. Kalotte auf dem Wählhebelschaft ohne Beeinträchtigung der Verdrehsicherung.

Im Folgenden wird die Erfindung anhand lediglich Ausführungsbeispiele darstellender Zeichnungen näher erläutert. Dabei zeigt:
- **Fig. 1**: in schematischer Perspektivdarstellung eine Ausführungsform einer Kalotteneinrichtung gemäß der vorliegenden Erfindung, auf dem Schaft eines Wählhebels angeordnet, in einer Schaltkonsole eines Kraftfahrzeugs;
- **Fig. 2**: in schematischer Darstellung die Kalotteneinrichtung gemäß **Fig. 1** in der Draufsicht;
- **Fig. 3**: in schematischer Darstellung eine Ausführungsform einer Kalotteneinrichtung, angeordnet auf dem Schaft eines Wählhebels;
- **Fig. 4**: in einer **Fig. 3** entsprechenden, vergrößerten Ausschnittsdarstellung den Schaftbereich mit der Überwurfmutter der Kalotteneinrichtung gemäß **Fig. 3****;**
- **Fig. 5**: in einer **Fig. 4** entsprechenden Darstellung und Ansicht den Klemmbereich der Hülse gemäß **Fig. 4** bei entfernter Überwurfmutter;
- **Fig. 6**: in einer vergrößerten Ausschnittsdarstellung eine alternative Ausführungsform einer Verdrehsicherung der Hülse auf dem Wählhebelschaft;
- **Fig. 7**: in gegenüber **Fig. 3** ebenfalls vergrößerter Ansicht eine erste Ausführung der Überwurfmutter; und
- **Fig. 8**: in einer **Fig. 7** entsprechenden Darstellung und Ansicht eine alternative Ausführung der Überwurfmutter.

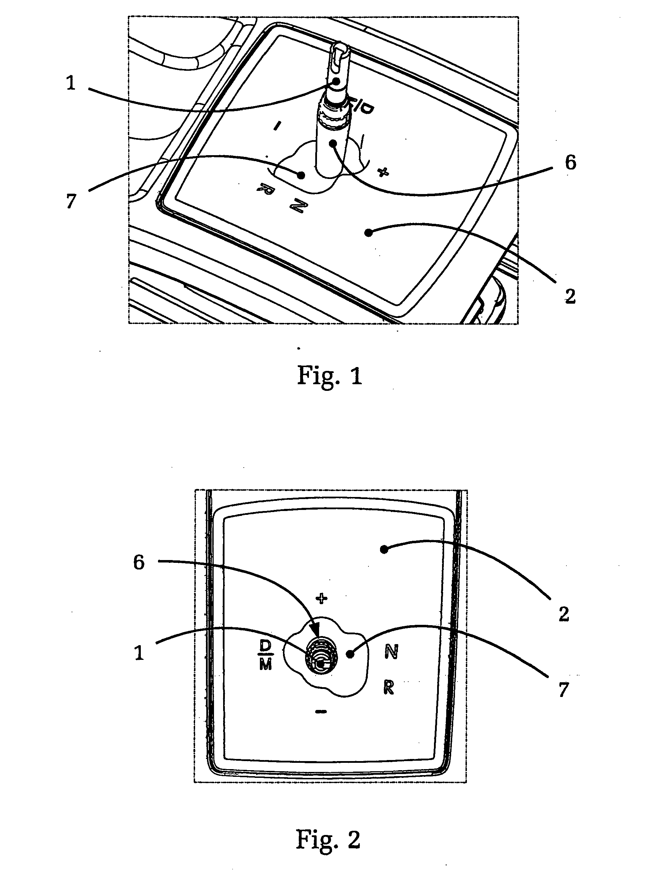

Die **Fig. 1** und **2** zeigen in schematischer Darstellung zunächst einmal eine Kalotteneinrichtung gemäß einer Ausführungsform der vorliegenden Erfindung, wobei die Kalotteneinrichtung auf dem Schaft eines Wählhebels 1 angeordnet ist und aus Hülse 6 und Kalotte 7 besteht. Der Wählhebel 1 durchragt die Kulisse 2 der Schaltkonsole einer Betätigungseinrichtung für ein Gangwechselgetriebe, beispielsweise für den Getriebeautomaten eines Kraftfahrzeugs. Bei der Schaltkonsole kann es sich beispielsweise um einen Teil der Mittelkonsole eines Kraftfahrzeugs handeln. Die Kalotte 7 ist dabei unmittelbar unterhalb der die Wählhebelkulisse bildenden Abdeckung 2 der Mittelkonsole angeordnet. Bei Kalotteneinrichtungen gemäß dem Stand der Technik würde die Kalotte 7 üblicherweise von unten mittels Federdruck gegen die Unterseite der Wählhebelkulisse bzw. Konsolenabdeckung 2 gedrückt, wodurch - wie eingangs beschrieben - störende Schleifspuren und/oder Schleifgeräusche entstehen können.

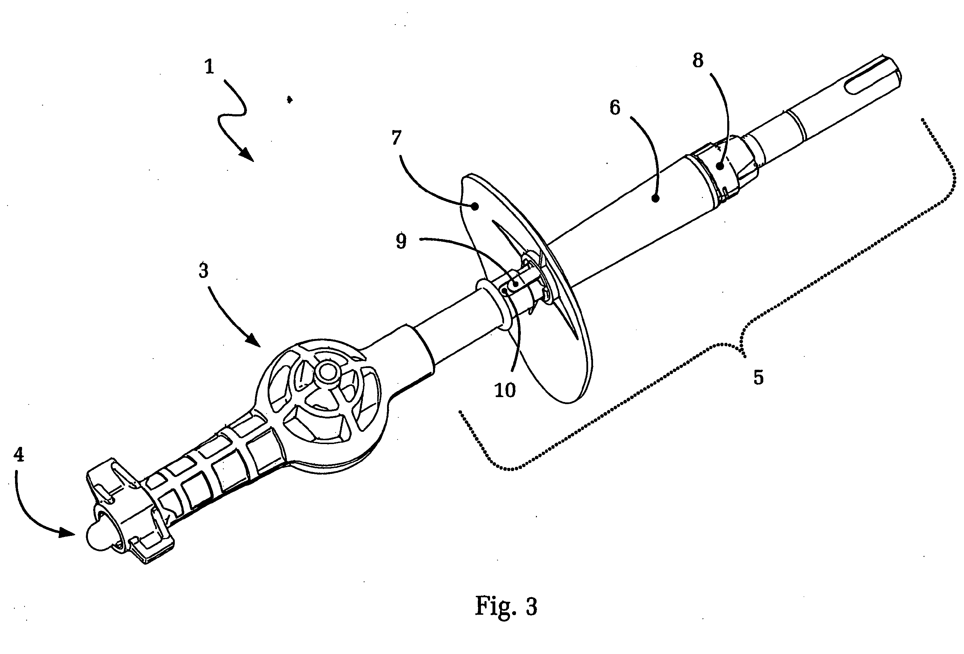

**Fig. 3** zeigt - gegenüber den **Fig. 1** und **2** vergrößert - nochmals den entsprechenden Schalt- bzw. Wählhebel 1 (auch hier ohne Griffelement). In an sich bekannter Weise umfasst der Wählhebel 1 dabei ein Kugelgelenk 3 zur beweglichen Führung des Wählhebels 1 sowie einen federbelasteten Rastbolzen 4 zum Zweck der mechanischen Rastierung in den unterschiedlichen Schaltpositionen. Für sich genommen ebenfalls bekannt ist eine am Wählhebelschaft 5 mittels einer über den Wählhebelschaft 5 geschobenen Hülse 6 angeordnete Abdeckungskalotte 7.

Die Kalotte 7 dient dabei der Abdeckung einer beispielsweise in der Mittelkonsole (nicht dargestellt) des Kraftfahrzeugs angeordneten Kulissenöffnung, welche von dem Wählhebel 1 durchragt wird, wobei der Wählhebel 1 in der Kulissenöffnung entlang zumeist mehrerer Schaltgassen bewegt werden kann.

Im Unterschied zum Stand der Technik ist die Kalotte 7 gemäß der Ausführungsform in **Fig. 3** jedoch nicht in Richtung auf das Kugelgelenk 3 des Wählhebels 1 federbelastet beweglich auf dem Wählhebelschaft 5 angeordnet. Vielmehr erfolgt erfindungsgemäß eine axial variable Klemmung der hier mit der Kalotte 7 verbundenen Hülse 6 auf dem Wählhebelschaft mittels einer Überwurfmutter 8.

Zur Sicherung gegen Verdrehen besitzt die Hülse 6 zudem zwei sich bezüglich des Wählhebelschafts 5 in axialer Richtung erstreckende Gleitfedern 9, welche in zwei entsprechende axial verlaufende Nuten 10 im Wählhebelschaft 5 eingreifen (in **Fig. 3** sichtbar lediglich eine Gleitfeder 9 sowie eine Nut 10). Auf diese Weise wird ein Verdrehen der Hülse 6 gegenüber der auf der Hülse 6 angeordneten Kalotte 7 relativ zum Wählhebelschaft 5 zuverlässig verhindert.

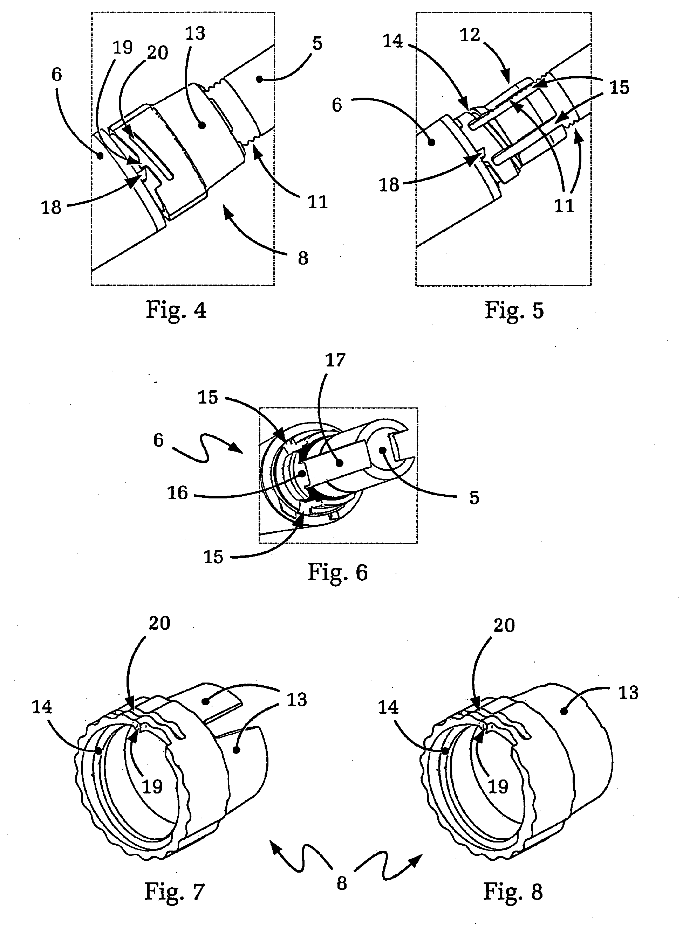

Die Klemmung der Hülse 6 (und damit der mit der Hülse 6 verbundenen Kalotte 7) auf dem Wählhebelschaft 5 ist vergrößert nochmals in **Fig. 4** dargestellt. Man erkennt zunächst einmal - hier als Nullgewinde 11 ausgeführte - Rastvertiefungen, die entlang des vorgesehenen axialen Klemmbereichs umlaufend auf dem Wählhebelschaft 5 angeordnet sind. Der Begriff Nullgewinde bedeutet hier, dass die Rastvertiefungen 11 bezüglich ihrer Querschnittsform im Wesentlichen wie ein Gewinde ausgeformt sind, nicht jedoch wie ein Gewinde schraubenförmig um den Schaft 5 umlaufen. Vielmehr bildet jede Windung 11 für sich genommen eine eigenständig um den Schaft 5 des Wählhebels umlaufende ringförmige Vertiefung 11. Ein dementsprechendes, formkorrespondierendes Nullgewinde 11 ist auch auf der Innenseite des geschlitzten Klemmbereichs 12 der Hülse 6 angeordnet, wie insbesondere in **Fig. 5** ersichtlich.

Dies bedeutet, dass die axiale Position der Hülse 6 auf dem Wählhebelschaft 5 nicht von der Rotationswinkelstellung der Hülse 6 relativ zum Wählhebelschaft 5 abhängt. Bei abgenommener bzw. nicht fest auf die Hülse 6 aufgedrehter und verriegelter Überwurfmutter 8 (vgl. Darstellung in **Fig. 5**) lässt sich die Hülse 6 und damit auch die mit der Hülse 6 verbundene Kalotte 7 (vgl. **Fig. 3**) innerhalb des mit dem Nullgewinde 11 versehenen Bereichs des Wählhebelschafts 5 somit zunächst einmal axial in zahlreichen Rastpositionen frei anordnen. Hierdurch kann also der gewünschte geringe Luftspalt zwischen der Kalotte 7 (vgl. **Fig. 3**) und der Kulissenabdeckung 2 (vgl. **Fig. 1** und **2**) beispielsweise im Bereich der Mittelkonsole eines Kraftfahrzeugs voreingestellt werden. Anschließend erfolgt durch Aufschrauben der Überwurfmutter 8 auf den geschlitzten Klemmbereich 12 der Hülse 6 eine radiale Verspannung zwischen den mit dem Nullgewinde 11 versehenen Enden des geschlitzten Klemmbereichs der Hülse bei 12 und dem entsprechenden Klemmbereich 13 der Überwurfmutter 8.

Hierdurch werden somit die Enden des geschlitzten Klemmbereichs 12 der Hülse 6 durch den innen vorzugsweise konisch ausgeführten Klemmbereich 13 der Überwurfmutter 8 auf den Wählhebelschaft 5 im Bereich des Nullgewindes 11 gepresst, wodurch jede axiale Verschiebung der Hülse 6 und damit auch der mit der Hülse verbundenen Kalotte 7 (vgl. **Fig. 3**) relativ zum Wählhebelschaft 5 formschlüssig unterbunden wird. Der zuvor eingestellte Luftspalt zwischen der Kalotte 7 und der Kulissenabdeckung 2 in der Mittelkonsole (vgl. **Fig. 1** und **2**) wird auf diese Weise somit dauerhaft fixiert.

**Fig. 6** zeigt eine gegenüber der Darstellung in **Fig. 3** alternative Ausführungsform für eine Verdrehsicherung zwischen der Hülse 6 und dem Wählhebelschaft 5. Hierzu erhält bei der Verdrehsicherung gemäß **Fig. 6** einer der bzw. die beiden gegenüberliegenden Finger, welche im Klemmbereich 12 der Hülse 6 durch die dort angeordneten Schlitze 15 gebildet sind (vgl. **Fig. 5**), jeweils einen sich axial über eine gewisse Länge erstreckende Gleitfeder 16, welche jeweils in eine zur Gleitfeder 16 formkorrespondierende Nut 17 im Wählhebelschaft 5 eingreift und auf diese Weise eine Verdrehung zwischen der Hülse 6 und dem Wählhebelschafts 5 sicher unterbindet.

Wie aus einer Zusammenschau der **Fig. 4** und **7** bzw. **8** hervorgeht, ist das Schraubgewinde 14 der Überwurfmutter 8 sowie das korrespondierende Schraubgewinde 14 der Hülse 6 als Steilgewinde ausgeführt, weshalb hier maximal eine Umdrehung zum Aufschrauben und Verriegeln der Überwurfmutter 8 auf dem zugehörigen Ende 12 der Hülse 6 genügt. Um der bei einem Steilgewinde geringen Selbsthemmung und damit gegebenen Gefahr des selbsttätigen Lösens der Überwurfmutter 8 zu begegnen, ist an der Überwurfmutter 8 und an der Hülse 6 ferner jeweils ein entsprechender Rasthaken 19 bzw. Rastvorsprung 18 angeordnet, wobei Rastvorsprung 18 und Rasthaken 19 in der verriegelnden Sollposition der Überwurfmutter 8 ineinander eingreifen (vgl. **Fig. 4**) und jegliches unerwünschte selbsttätige Lösen der Überwurfmutter 8 zuverlässig verhindern.

Zur Erzeugung einer definierten Rastkraft bzw. Rastbewegung ist die Überwurfmutter 8 gemäß **Fig. 4** bzw. gemäß **Fig. 7** und **8** ün Bereich des Rasthakens 19 in Umfangsrichtung mit einer schlitzförmigen Ausnehmung 20 versehen, wodurch sich auf konstruktiv einfache und zuverlässige Weise eine einstückige federnde Aufhängung des Rasthakens 19 an der Überwurfmutter 8 ergibt. Zudem erlaubt die federnde Aufhängung des Rasthakens 19 bei Bedarf ein einfaches Lösen der Verrastung zwischen Überwurfmutter 8 und Hülse 6, indem der Rasthaken 19 mittels eines entsprechenden Werkzeugs außer Eingriff mit dem zugehörigen Rastvorsprung 18 an der Hülse 6 gebracht wird.

Die **Fig. 7** und **8** zeigen nochmals separat die Überwurfmutter 8 in zwei alternativen Ausführungen. Man erkennt - neben den bei beiden Ausführungen vorhandenen Elementen Steilgewinde 14, Rasthaken 19 und schlitzförmige Ausnehmung 20 - den bei der Ausführung der Überwurfmutter 8 gemäß **Fig. 7** geschlitzt ausgebildeten Klemmbereich 13, während der Klemmbereich 13 bei der Überwurfmutter 8 gemäß **Fig. 8** in Umfangsrichtung geschlossen ausgebildet ist. Auf diese Weise lässt sich insbesondere die Klemmkraftkennlinie der Überwurfmutter 8 je nach gewünschter bzw. vorgesehener Höhe der Klemmkraft der Überwurfmutter 8 auf der Hülse 6 konstruktiv unterschiedlich stark einstellen.

Im Ergebnis wird deutlich, dass dank der Erfindung eine Kalotteneinrichtung zur Abdeckung der Kulissenöffnung eines Wählhebels oder Schalthebels geschaffen wird, die sich kostengünstig produzieren und montieren lässt sowie mit einer minimalen Anzahl an Bauteilen auskommt. Insbesondere werden dank der Erfindung die bei den Kalotteneinrichtungen aus dem Stand der Technik vorhandenen Nachteile bezüglich der Schleifgeräusche und Schleifspuren im Bereich der Kalotte bzw. Mittelkonsole eliminiert.

Die Erfindung eröffnet damit Verbesserungspotenziale bei Konstruktion und Montage von Schalt- bzw. Wählhebeln für Gangwechselgetriebe, sowie bei deren konstruktiver und ergonomischer Eingliederung in die Bedienoberfläche des Kraftfahrzeugs.

### Bezugszeichenliste

- 1: Schalthebel, Wählhebel
- 2: Konsolenabdeckung, Kulisse
- 3: Kugelgelenk
- 4: Rastbolzen
- 5: Wählhebelschaft
- 6: Hülse
- 7: Kalotte
- 8: Überwurfmutter
- 9: Gleitfeder
- 10: Nut
- 11: Rastvertiefung, Nullgewinde
- 12: Hülsen-Klemmbereich
- 13: Muttern-Klemmbereich, Klemmfinger
- 14: Schraubgewinde, Steilgewinde
- 15: Schlitz
- 16: Gleitfeder
- 17: Nut
- 18: Rastvorsprung
- 19: Rasthaken
- 20: schlitzförmige Ausnehmung

## Patentansprüche

1. Kalotteneinrichtung zur Abdeckung der Kulissenöffnung einer Betätigungseinrichtung für ein Gangwechselgetriebe mit einem Wählhebel bzw. Schalthebel (1), die Kalotteneinrichtung umfassend eine Kalotte (7) sowie eine auf dem Schaft (5) des Wählhebels bzw. Schalthebels anordenbare, mit der Kalotte verbundene Hülse (6),
**gekennzeichnet durch**
eine Überwurfmutter (8), wobei die Hülse (6) anhand eines Hülsen-Klemmbereichs (12) mit dem Hebelschaft (5) mittels der Überwurfmutter (8) in einer Vielzahl unterschiedlicher Axialpositionen innerhalb eines Schaftklemmbereichs auf dem Hebelschaft (5) festlegbar ist.

2. Kalotteneinrichtung nach Anspruch 1,
**dadurch gekennzeichnet,**
**dass** Kalotte (7) und Hülse (6) einstückig ausgebildet sind.

3. Kalotteneinrichtung nach Anspruch 1 oder 2,
**dadurch gekennzeichnet,**
**dass** die Oberfläche des Hebelschafts (5) innerhalb des Schaftklemmbereichs sowie die Innenoberfläche des Klemmbereichs (12) der Hülse (6) jeweils formkorrespondierende Nullgewinde (11) aufweisen.

4. Kalotteneinrichtung nach einem der Ansprüche 1 bis 3,
**dadurch gekennzeichnet,**
**dass** die Überwurfmutter (8) einen Klemmbereich (13) mit konisch zulaufender Innenkontur aufweist.

5. Kalotteneinrichtung nach Anspruch 4,
**dadurch gekennzeichnet,**
**dass** der Klemmbereich (13) der Überwurfmutter (8) geschlitzt ausgebildet ist.

6. Kalotteneinrichtung nach einem der Ansprüche 1 bis 5,
**dadurch gekennzeichnet,**
**dass** der Klemmbereich (12) der Hülse (6) geschlitzt ausgebildet ist.

7. Kalotteneinrichtung nach einem der Ansprüche 1 bis 6,
**dadurch gekennzeichnet,**
**dass** Hülse (6) und Überwurfmutter (8) jeweils formkorrespondierende Steilgewinde aufweisen.

8. Kalotteneinrichtung nach einem der Ansprüche 1 bis 7,
**dadurch gekennzeichnet,**
**dass** Überwurfmutter (8) und Hülse (6) jeweils zumindest einen formkorrespondierenden Rasthaken (19) bzw. Rastvorsprung (18) aufweisen.

9. Kalotteneinrichtung nach Anspruch 8,
**dadurch gekennzeichnet,**
**dass** der zumindest eine Rasthaken (19) stirnseitig an der Überwurfmutter (8) angeordnet ist, wobei die Überwurfmutter (8) im Bereich des Rasthakens (19) eine im Wesentlichen in Umfangsrichtung verlaufende schlitzförmige Ausnehmung (17) aufweist.

10. Kalotteneinrichtung nach einem der Ansprüche 1 bis 9,
**dadurch gekennzeichnet,**
**dass** die Kalotte (7) oder die Hülse (6) zumindest eine in Axialrichtung verlaufende Gleitfeder (9, 16), und der Hebelschaft (5) eine zu der zumindest einen Gleitfeder (9, 16) formkorrespondierende, in Axialrichtung verlaufende Nut (10, 17) als Verdrehsicherung zwischen Hülse (6) bzw. Kalotte (7) und Hebelschaft (5) aufweist.

## Claims

1. Calotte device for covering the gate opening of an actuating device for a gearshift transmission having a selector lever or shift lever (1), the calotte device comprising a calotte (7) and also a bushing (6) which can be arranged on the shank (5) of the selector lever or shift lever and which is connected to the calotte,
**characterized by**
a sleeve nut (8), wherein the bushing (6) can be fixed, by way of a bushing clamping region (12), to the lever shank (5) by means of the sleeve nut (8) in a multiplicity of different axial positions within a shank clamping region on the lever shank (5).

2. Calotte device according to Claim 1,
**characterized**
**in that** the calotte (7) and bushing (6) are formed in one piece.

3. Calotte device according to Claim 1 or 2,
**characterized in that** the surface of the lever shank (5) within the shank clamping region and the inner surface of the clamping region (12) of the bushing (6) have in each case zero-gradient threads (11) which correspond in shape.

4. Calotte device according to one of Claims 1 to 3, **characterized**
**in that** the sleeve nut (8) has a clamping region (13) with a conically tapering inner contour.

5. Calotte device according to Claim 4,
**characterized**
**in that** the clamping region (13) of the sleeve nut (8) is of slotted design.

6. Calotte device according to one of Claims 1 to 5,
**characterized**
**in that** the clamping region (12) of the bushing (6) is of slotted design.

7. Calotte device according to one of Claims 1 to 6,
**characterized**
**in that** the bushing (6) and sleeve nut (8) have in each case steep-gradient threads which correspond in shape.

8. Calotte device according to one of Claims 1 to 7,
**characterized**
**in that** the sleeve nut (8) and bushing (6) have in each case at least one latching hook (19) and latching projection (18), respectively, which correspond in shape.

9. Calotte device according to Claim 8,
**characterized**
**in that** the at least one latching hook (19) is arranged on the face side of the sleeve nut (8), wherein the sleeve nut (8) has, in the region of the latching hook (19), a slot-like recess (17) which runs substantially in the circumferential direction.

10. Calotte device according to one of Claims 1 to 9,
**characterized**
**in that** the calotte (7) or the sleeve (6) has at least one sliding key (9, 16) which runs in the axial direction, and the lever shank (5) has a groove (10, 17), which corresponds in shape to the at least one sliding key (9, 16) and which runs in the axial direction, as a twist prevention means between the sleeve (6) or calotte (7) and lever shank (5).

## Revendications

1. Dispositif de calotte pour le recouvrement de l'ouverture de coulisse d'un système d'actionnement pour une transmission à changement de vitesse avec un levier de sélection ou un levier de changement de vitesse (1), le dispositif de calotte comprenant une calotte (7) ainsi qu'une douille (6) pouvant être disposée sur la tige (5) du levier de sélection ou du levier de changement de vitesse et connectée à la calotte,
**caractérisé par**
un écrou d'accouplement (8), la douille (6) pouvant être fixée à l'aide d'une zone de serrage de douille (12) à la tige de levier (5) au moyen de l'écrou d'accouplement (8) dans une pluralité de positions axiales différentes à l'intérieur d'une zone de serrage de tige sur la tige de levier (5).

2. Dispositif de calotte selon la revendication 1,
**caractérisé en ce que**
la calotte (7) et la douille (6) sont réalisées d'une seule pièce.

3. Dispositif de calotte selon la revendication 1 ou 2,
**caractérisé en ce que**
la surface de la tige de levier (5) à l'intérieur de la zone de serrage de tige et la surface intérieure de la zone de serrage (12) de la douille (6) présentent à chaque fois des filetages nuls (11) à correspondance de forme.

4. Dispositif de calotte selon l'une quelconque des revendications 1 à 3,
**caractérisé en ce que**
l'écrou d'accouplement (8) présente une zone de serrage (13) avec un contour intérieur se terminant avec une forme conique.

5. Dispositif de calotte selon la revendication 4,
**caractérisé en ce que**
la zone de serrage (13) de l'écrou d'accouplement (8) est réalisée sous forme fendue.

6. Dispositif de calotte selon l'une quelconque des revendications 1 à 5,
**caractérisé en ce que**
la zone de serrage (12) de la douille (6) est réalisée sous forme fendue.

7. Dispositif de calotte selon l'une quelconque des revendications 1 à 6,
**caractérisé en ce que**
la douille (6) et l'écrou d'accouplement (8) présentent à chaque fois des filetages raides à correspondance de forme.

8. Dispositif de calotte selon l'une quelconque des revendications 1 à 7,
**caractérisé en ce que**
l'écrou d'accouplement (8) et la douille (6) présentent à chaque fois au moins un crochet d'encliquetage (19) ou une saillie d'encliquetage (18) à correspondance de forme.

9. Dispositif de calotte selon la revendication 8,
**caractérisé en ce que**
l'au moins un crochet d'encliquetage (19) est disposé du côté frontal sur l'écrou d'accouplement (8), l'écrou d'accouplement (8) présentant dans la région du crochet d'encliquetage (19) un évidement (17) en forme de fente s'étendant essentiellement dans la direction périphérique.

10. Dispositif de calotte selon l'une quelconque des revendications 1 à 9,
**caractérisé en ce que**
la calotte (7) ou la douille (6) présente au moins un ressort glissant (9, 16) s'étendant dans la direction axiale et la tige de levier (5) présente une rainure (10, 17) s'étendant dans la direction axiale, à correspondance de forme avec l'au moins un ressort glissant (9, 16), en tant que fixation antirotation entre la douille (6) ou la calotte (7) et la tige de levier (5).
